# DEMANDE DE BREVET EUROPEEN

(11) **EP 2 600 078 A2**
(43) Date de publication de la demande: **05.06.2013**
(21) Numéro de dépôt: 12194969.7
(22) Date de dépôt: 30.11.2012
(51) Int. Cl.: F24J 2/52, H01L 31/048, E04D 13/18

(54) **Elément de toiture et son procédé de fabrication**

(30) Priorité: 01.12.2011 FR 1161053
(71) Demandeur: Gaelys, 44690 La Haie Fouassiere (FR)
(72) Inventeur: Derieppe, Luc, 44690 La Haie Fouassiere (FR)
(74) Mandataire: Godineau, Valérie

(57) **Abrégé**

L'invention concerne un élément de toiture du type comprenant une plaque (1) de couverture nervurée ou ondulée, solidarisable à la charpente, et un panneau (2) photovoltaïque venant à recouvrement au moins partiel de la plaque (1) de couverture.

Cet élément de toiture est caractérisé en ce que le panneau (2) photovoltaïque et la plaque (1) de couverture sont assemblés l'un à l'autre par collage à l'aide d'un adhésif (3).

## Description

La présente invention concerne un élément de toiture du type comprenant une plaque de couverture nervurée ou ondulée, solidarisable à la charpente destinée à recevoir ledit élément de toiture, et un panneau photovoltaïque venant à recouvrement au moins partiel de la plaque de couverture ainsi que le procédé de fabrication d'un tel élément de toiture.

De nombreux dispositifs de fixation d'un panneau photovoltaïque à une plaque de couverture ont été imaginés jusqu'à présent, comme l'illustre le brevet FR-2.935.410. Ces dispositifs sont souvent complexes et peuvent être formés de rails, d'éléments de structure ou autre.

Un but de la présente invention est donc de proposer un élément de toiture du type précité dont la conception est simplifiée.

Un autre but de la présente invention est de proposer un élément de toiture du type précité dont la conception permet une préfabrication complète dudit élément de toiture en usine.

A cet effet, l'invention a pour objet un élément de toiture du type comprenant une plaque de couverture nervurée ou ondulée, solidarisable à la charpente, et un panneau photovoltaïque venant à recouvrement au moins partiel de la plaque de couverture, **caractérisé en ce que** le panneau photovoltaïque et la plaque de couverture sont assemblés l'un à l'autre par collage à l'aide d'un adhésif.

La suppression d'une fixation complexe entre panneau photovoltaïque et plaque de couverture engendre une réduction du poids de l'ensemble, un abaissement du coût de fabrication et la possibilité d'une préfabrication de l'ensemble en usine.

De préférence, la partie de la plaque de couverture assemblée par collage au panneau photovoltaïque est formée au moins par le sommet d'au moins certaines des ondulations ou nervures de ladite plaque de couverture.

De préférence, l'élément de toiture du type dans lequel le panneau photovoltaïque comprend au moins une face d'appui sur la plaque de couverture et une face opposée d'exposition aux rayonnements solaires, est **caractérisé en ce que** la face d'appui du panneau photovoltaïque sur la plaque de couverture et la face opposée d'exposition aux rayonnements solaires sont formées chacune par une plaque de verre et en ce que la partie du panneau photovoltaïque assemblée par collage à la plaque de couverture est formée par au moins une partie de la face d'appui du panneau photovoltaïque sur la plaque de couverture.

La réalisation d'au moins la face d'appui du panneau photovoltaïque sous forme de plaque de verre facilite le collage. Elle permet également un nettoyage aisé de ladite face avant collage.

De préférence encore, que les plaques de verre constitutives de la face d'appui et de la face opposée du panneau photovoltaïque sont assemblées l'une à l'autre par un joint périphérique de type polyisobutylène.

De préférence, les faces du panneau photovoltaïque sont assemblées l'une à l'autre à l'aide d'au moins un film thermocollant. La réalisation des deux faces du panneau photovoltaïque avec une plaque de verre facilite l'assemblage desdites faces entre elles. De préférence, le panneau photovoltaïque comprend en outre, prises en sandwich entre lesdites faces dudit panneau, des cellules photovoltaïques.

De préférence, au moins une partie de l'adhésif est du type cordon de colle.

De préférence, au moins une partie de l'adhésif est du type bande adhésive double face.

De préférence, le sommet d'au moins l'une des ondulations ou nervures de la plaque de couverture destinée à être assemblée par collage au panneau photovoltaïque est équipé d'une bande adhésive double face qui s'étend sensiblement parallèlement à l'axe longitudinal de ladite nervure ou ondulation qu'elle équipe.

Cette disposition permet une dilatation du panneau sans nuire à la qualité du collage.

De préférence, la bande adhésive est une bande continue d'une extrémité à l'autre de ladite nervure ou ondulation qu'elle équipe.

De préférence, l'adhésif présente une âme adhésive formée d'une mousse acrylique conformable à cellules fermées revêtue sur chacune de ses faces d'une couche d'adhésif.

De préférence, la bande adhésive présente une épaisseur comprise entre 2 et 4 mm, de préférence voisine de 3 mm. La bande adhésive présente une largeur comprise entre 10 et 25 mm, de préférence égale à 15 mm ou 20 mm.

De préférence, l'adhésif est choisi dans le groupe formé par les colles acryliques ou les colles vinyliques.

De préférence, la plaque de couverture est une plaque de forme générale rectangulaire ou carrée délimitée par quatre bords et le panneau photovoltaïque s'étend en retrait d'au moins deux des bords de la plaque de couverture. En particulier, la plaque de couverture comporte un bord supérieur correspondant au bord le plus au-dessus lorsque la plaque de couverture est disposée dans la pente de la toiture, un bord dit inférieur et deux bords latéraux. Le panneau photovoltaïque s'étend en retrait des bords supérieur et inférieur de la plaque de couverture. Ce positionnement en retrait permet d'une part, une superposition des plaques de couverture, d'autre part une fixation de la plaque de couverture à la charpente de la toiture par l'intermédiaire de moyens de liaison appropriés. Généralement, la distance séparant le bord inférieur de la plaque de couverture du bord du panneau photovoltaïque le plus proche est inférieure à la distance séparant le bord supérieur de la plaque de couverture du bord du panneau photovoltaïque le plus proche.

Ce positionnement en retrait qui autorise une superposition des plaques de couverture permet également une ventilation entre panneaux photovoltaïques augmentant le rendement desdits panneaux et la création d'une voie de circulation entre panneaux photovoltaïques facilitant l'intervention de personnel et/ou l'entretien, ladite voie de circulation disposée à l'aplomb des pannes de toiture étant parfaitement sûre.

L'invention a encore pour objet un procédé de fabrication d'un élément de toiture comprenant une plaque de couverture nervurée ou ondulée solidarisable à la charpente et un panneau photovoltaïque venant à recouvrement au moins partiel de la plaque de couverture, **caractérisé en ce que** ledit procédé comprend au moins une étape de pose d'un adhésif sur la plaque de couverture et/ou le panneau photovoltaïque et une étape de pressage par passage entre au moins deux rouleaux de la plaque de couverture et du panneau photovoltaïque disposés à l'état superposé.

De préférence, l'adhésif se présente sous forme de bande adhésive double face venant à recouvrement au moins partiel du sommet d'au moins l'une des ondulations ou nervures de ladite plaque de couverture et/ou du panneau photovoltaïque.

L'invention a encore pour objet une toiture du type comprenant au moins un élément de toiture du type précité.

L'invention sera bien comprise à la lecture de la description suivante d'exemples de réalisation, en référence aux dessins annexés dans lesquels :
la figure 1 représente une vue schématique en éclaté des éléments formant un élément de toiture conforme à l'invention ;
la figure 2 représente une vue schématique à l'état assemblé des éléments formant un élément de toiture conforme à l'invention ;
la figure 3 représente une vue en perspective d'un panneau photovoltaïque prêt à être assemblé à une plaque de couverture ;

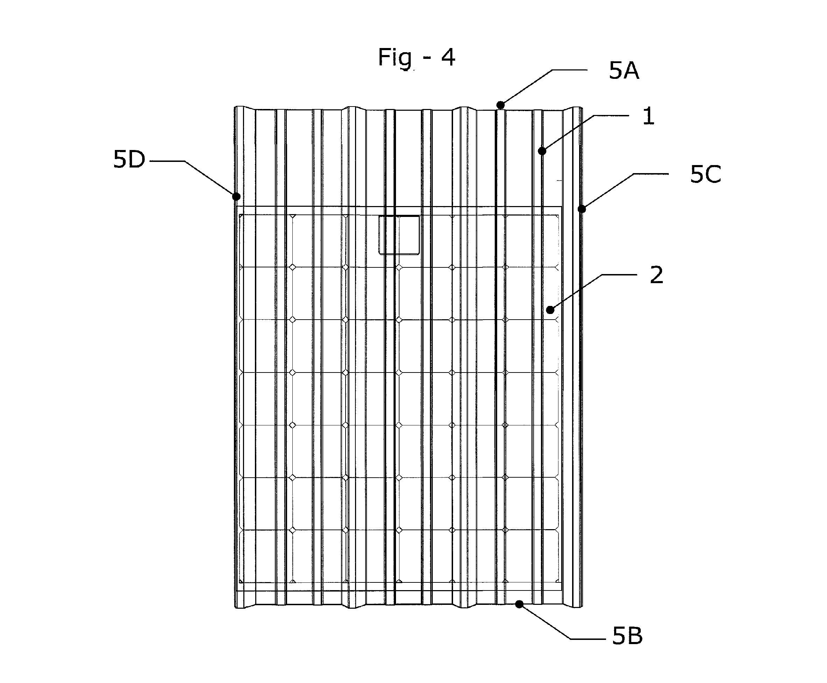

la figure 4 représente une vue de dessus d'un élément de toiture.

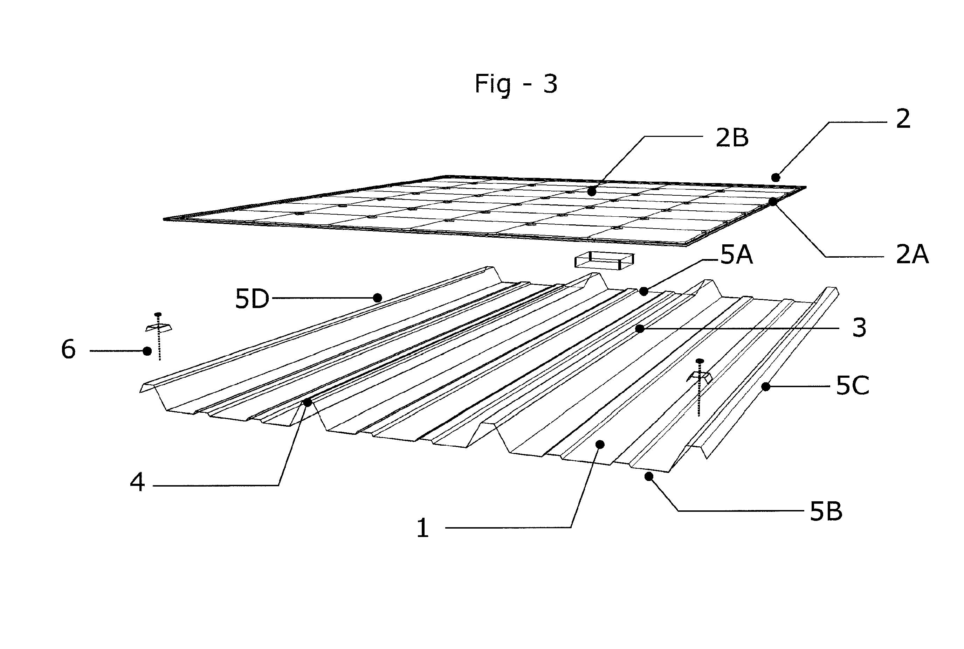

Comme mentionné ci-dessus, l'élément de toiture, objet de l'invention, comprend une plaque 1 de couverture nervurée ou ondulée, généralement en métal, encore appelée bac acier, et un panneau 2 photovoltaïque. La plaque 1 de couverture est solidarisable à la charpente, en particulier aux pannes de la charpente, généralement à l'aide de moyens 6 de liaison, tels que des cavaliers, chevauchant une nervure de la plaque et fixés par vissage à l'élément de charpente sur lequel la plaque de couverture repose. Le panneau 2 photovoltaïque surmonte la plaque 1 de couverture à l'état solidarisé de la plaque 1 de couverture à la charpente. Le panneau photovoltaïque forme donc au moins une partie de la face du dessus de l'élément de toiture. La plaque 1 de couverture est formée de nervures 4 ou ondulations s'étendant sensiblement parallèlement entre elles et parallèlement à la pente du toit lorsque la toiture présente une pente. Ces nervures 4 sont généralement séparées par des plats de liaison comme l'illustre la figure 3 dans laquelle la plaque 1 de couverture comporte quatre nervures 4 parallèles, à savoir deux nervures de rive et deux nervures intermédiaires. Nervures et plats de liaison forment entre eux un canal de guidage des eaux.

De manière caractéristique à l'invention, le panneau 2 photovoltaïque et la plaque 1 de couverture sont assemblés l'un à l'autre par collage à l'aide d'un adhésif 3.

Dans les exemples représentés, la partie de la plaque 1 de couverture assemblée par collage au panneau 2 photovoltaïque est formée par le sommet d'au moins certaines des ondulations ou nervures 4 de ladite plaque 1 de couverture, en l'occurrence par le sommet des nervures intermédiaires de la plaque 1 de couverture. Le panneau 2 photovoltaïque comprend quant à lui au moins une face 2A d'appui sur la plaque 1 de couverture et une face 2B opposée d'exposition aux rayonnements solaires. La partie du panneau 2 photovoltaïque assemblée par collage à la plaque 1 de couverture est formée par au moins une partie de la face 2A d'appui du panneau 2 photovoltaïque sur la plaque 1 de couverture.

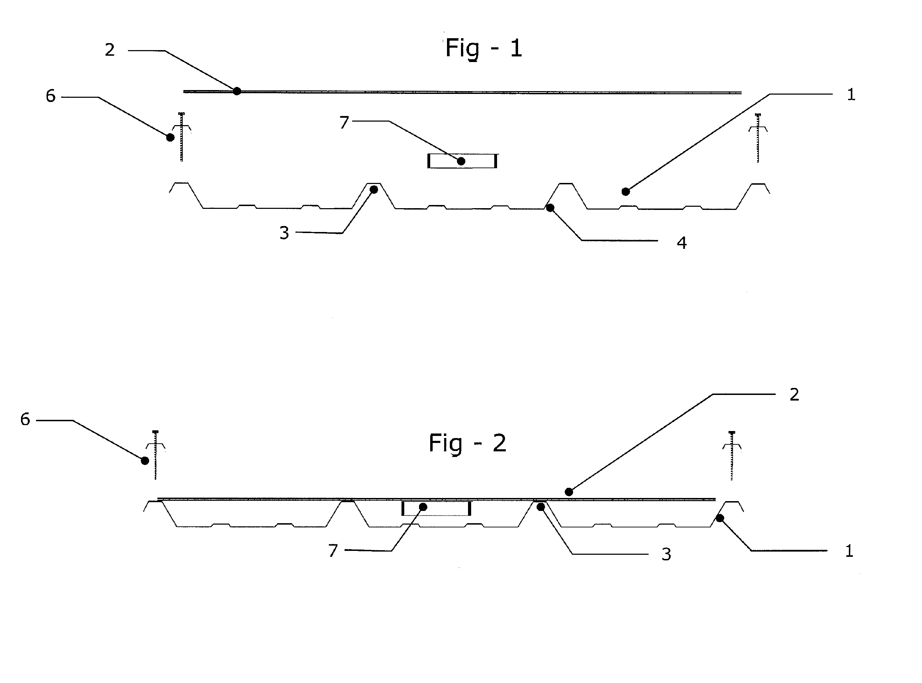

Dans les exemples représentés, la face 2A d'appui du panneau 2 photovoltaïque sur la plaque 1 de couverture est formée par une plaque de verre. Il en est de même de la face 2B opposée d'exposition aux rayonnements solaires du panneau 2 photovoltaïque. De préférence, chaque face du panneau photovoltaïque est donc une plaque de verre. Les plaques de verre prennent en sandwich entre elles les cellules photovoltaïques. Les plaques de verre constitutives de la face 2A d'appui et de la face 2B opposée du panneau 2 photovoltaïque sont assemblées l'une à l'autre par un joint périphérique de type polyisobutylène. A titre d'exemple, le produit de la Société KOMMERLING portant la référence Helioseal PV5101 (marque déposée) offre d'excellents résultats. Le panneau 2 photovoltaïque ainsi réalisé est raccordé à un boîtier 7 électrique de raccordement, lui-même raccordé à un onduleur déporté. Le boîtier 7 de raccordement est destiné à être collé sur la face 2A d'appui du panneau 2 photovoltaïque, dans l'espace laissé libre entre deux nervures 4, à l'état assemblé du panneau 2 photovoltaïque à la plaque 1 de couverture, comme l'illustre la figure 2. Généralement, les plaques de verre du panneau 2 photovoltaïque sont en outre assemblées l'une à l'autre par collage à l'aide d'au moins un film thermocollant. L'adhésif 3 utilisé pour l'assemblage du panneau 2 photovoltaïque et de la plaque 1 de couverture entre eux peut se présenter sous forme de colle liquide ou pâteuse ou sous forme de bande adhésive double face. Cet adhésif 3 peut par exemple être stocké dans une cartouche et déposé à l'aide d'un pistolet. Cet adhésif 3 peut encore se présenter sous forme d'un rouleau de bandes adhésives double face. Cet adhésif est choisi dans le groupe formé par les colles acryliques ou les colles vinyliques.

Dans les exemples représentés, l'adhésif est un adhésif acrylique haute performance double face. Cet adhésif présente une âme adhésive formée d'une mousse acrylique conformable à cellules fermées revêtue sur chacune de ses faces d'une couche d'adhésif. L'adhésif double face haute performance commercialisé par la Société 3M (marque déposée) sous la référence VHB (marque déposée) donne d'excellents résultats. La bande adhésive présente ici une épaisseur de 3 mm et une largeur de 20 mm.

Préalablement à la dépose de l'adhésif, la plaque de verre formant la face 2A d'appui du panneau 2 photovoltaïque et le sommet des nervures 4 de la plaque 1 de couverture sont dégraissés et nettoyés. A cet effet, les surfaces à coller sont nettoyées avec un mélange alcool isopropylique/eau. La surface de verre une fois propre et sèche peut être revêtue d'un primaire silane pour verre. En effet, en raison du caractère hydrophile du verre, l'adhésion du ruban peut être fragilisée par la possible pénétration d'humidité à l'interface entre le ruban et le verre. L'humidité peut engendrer une altération de la liaison ruban/verre et provoquer un décollement. Pour cette raison, on revêt la surface de verre d'une composition aqueuse appelée primaire silane à base de propan-2-ol et d'un composé contenant du silane.

De même, il peut être appliqué au moins sur la surface métallique à assembler par collage, une composition se présentant sous forme d'un mélange de cyclohexane et de xylène de préférence dans des proportions 2/3, 1/3 pour améliorer la qualité du collage. Cette composition peut être appliquée en une ou plusieurs couches.

L'adhésif est ensuite posé. De préférence, cet adhésif est déposé, au niveau du sommet d'au moins l'une des ondulations destinée à être assemblée par collage au panneau 2 photovoltaïque, sous forme d'une bande ou d'un corps continu ou discontinu.

Dans le détail, on procède comme suit. Dans le cas d'une plaque 1 de couverture à quatre nervures, on applique l'adhésif 3 sur les deux nervures 4 intermédiaires puis on superpose le panneau 2 photovoltaïque et on presse l'ensemble entre deux rouleaux. Le panneau 2 photovoltaïque et la plaque 1 de couverture sont dimensionnés de sorte que le panneau 2 photovoltaïque s'étend en retrait d'au moins deux des bords de la plaque 1 de couverture qui est une plaque de forme générale rectangulaire ou carrée délimitée par quatre bords 5A, 5B, 5C, 5D.

Le retrait ménagé au niveau du bord 5A supérieur de la plaque 1 de couverture permet à ladite plaque 1 de couverture d'être recouverte partiellement par la plaque 1 de couverture immédiatement au-dessus pris dans le sens de la pente. Le retrait ménagé au niveau du bord 5B inférieur de la plaque 1 de couverture permet la fixation de la plaque 1 de couverture à la charpente à l'aide des cavaliers 6 d'ores et déjà décrits ci-dessus.

L'élément de toiture tel que décrit ci-dessus peut former tout ou partie de la toiture. Cet élément de toiture peut être associé à des éléments de toiture similaires adjacents juxtaposés et/ou superposés ou à de simples plaques de couverture pour permettre la réalisation de ladite toiture.

## Revendications

1. Elément de toiture du type comprenant une plaque (1) de couverture nervurée ou ondulée, solidarisable à la charpente, et un panneau (2) photovoltaïque venant à recouvrement au moins partiel de la plaque (1) de couverture, **caractérisé en ce que** le panneau (2) photovoltaïque et la plaque (1) de couverture sont assemblés l'un à l'autre par collage à l'aide d'un adhésif (3).

2. Elément de toiture selon la revendication 1,
**caractérisé en ce que** la partie de la plaque (1) de couverture assemblée par collage au panneau (2) photovoltaïque est formée au moins par le sommet d'au moins certaines des ondulations ou nervures (4) de ladite plaque (1) de couverture.

3. Elément de toiture selon l'une des revendications 1 ou 2, du type dans lequel le panneau (2) photovoltaïque comprend au moins une face (2A) d'appui sur la plaque (1) de couverture et une face (2B) opposée d'exposition aux rayonnements solaires,
**caractérisé en ce que** la face (2A) d'appui du panneau (2) photovoltaïque sur la plaque (1) de couverture et la face (2B) opposée d'exposition aux rayonnements solaires sont formées chacune par une plaque de verre et **en ce que** la partie du panneau (2) photovoltaïque assemblée par collage à la plaque (1) de couverture est formée par au moins une partie de la face (2A) d'appui du panneau (2) photovoltaïque sur la plaque (1) de couverture.

4. Elément de toiture selon la revendication 3,
**caractérisé en ce que** les plaques de verre constitutives de la face (2A) d'appui et de la face (2B) opposée du panneau (2) photovoltaïque sont assemblées l'une à l'autre par un joint périphérique de type polyisobutylène.

5. Elément de toiture selon l'une des revendications 3 ou 4,
**caractérisé en ce qu'**au moins la surface à coller de la plaque de verre formant la face (2A) d'appui du panneau (2) photovoltaïque est revêtue d'un primaire silane pour verre, de préférence à base de propan-2-ol et d'un composé contenant du silane.

6. Elément de toiture selon l'une des revendications précédentes,
**caractérisé en ce qu'**au moins une partie de l'adhésif (3) est du type bande adhésive double face.

7. Elément de toiture selon l'une des revendications précédentes,
**caractérisé en ce que** le sommet d'au moins l'une des ondulations ou nervures (4) de la plaque (1) de couverture destinée à être assemblée par collage au panneau (2) photovoltaïque est équipé d'une bande adhésive double face qui s'étend sensiblement parallèlement à l'axe longitudinal de ladite nervure (4) ou ondulation qu'elle équipe.

8. Elément de toiture selon la revendication 7,
**caractérisé en ce que** la bande adhésive est une bande continue d'une extrémité à l'autre de ladite nervure (4) ou ondulation qu'elle équipe.

9. Elément de toiture selon l'une des revendications 7 ou 8,
**caractérisé en ce que** l'adhésif présente une âme adhésive formée d'une mousse acrylique conformable à cellules fermées revêtue sur chacune de ses faces d'une couche d'adhésif.

10. Elément de toiture selon l'une des revendications 7 à 9,
**caractérisé en ce que** la bande adhésive présente une largeur comprise entre 10 et 25 mm, de préférence égale à 15 mm ou 20 mm.

11. Elément de toiture selon l'une des revendications précédentes,
**caractérisé en ce que** l'adhésif (3) est choisi dans le groupe formé par les colles acryliques ou les colles vinyliques.

12. Elément de toiture selon l'une des revendications précédentes,
**caractérisé en ce que** la plaque (1) de couverture est une plaque de forme générale rectangulaire ou carrée délimitée par quatre bords et **en ce que** le panneau (2) photovoltaïque s'étend en retrait d'au moins deux des bords de la plaque (1) de couverture.

13. Elément de toiture selon l'une des revendications précédentes, **caractérisé en ce qu'**au moins une partie de l'adhésif (3) est du type cordon de colle.

14. Elément de toiture selon l'une des revendications précédentes,
**caractérisé en ce que** la surface métallique de la plaque (1) de couverture à assembler par collage est revêtue d'au moins une couche d'un mélange de cyclohexane et de xylène de préférence dans des proportions 2/3, 1/3.

15. Procédé de fabrication d'un élément de toiture selon l'une des revendications 1 à 14, ledit élément de toiture comprenant une plaque (1) de couverture nervurée ou ondulée solidarisable à la charpente et un panneau (2) photovoltaïque venant à recouvrement au moins partiel de la plaque (1) de couverture, **caractérisé en ce que** ledit procédé comprend au moins une étape de pose d'un adhésif (3) sur la plaque (1) de couverture et/ou le panneau (2) photovoltaïque et une étape de pressage par passage entre au moins deux rouleaux de la plaque (1) de couverture et du panneau (3) photovoltaïque disposés à l'état superposé.
